Europäisches Patentamt

European Patent Office

Office européen des brevets

(19)

(11) Veröffentlichungsnummer: **0 011 317**
**B1**

(12) # EUROPÄISCHE PATENTSCHRIFT

(45) Veröffentlichungstag der Patentschrift:
**20.01.82**

(21) Anmeldenummer: **79200541.5**

(22) Anmeldetag: **26.09.79**

(51) Int. Cl.³: **B 61 K 7/04, F 16 D 69/04**

---

(54) **Balkengleisbremse.**

---

(30) Priorität: **16.11.78 CH 11793/78**

(43) Veröffentlichungstag der Anmeldung:
**28.05.80 Patentblatt 80/11**

(45) Bekanntmachung des Hinweises auf die Patenterteilung:
**20.01.82 Patentblatt 82/3**

(84) Benannte Vertragsstaaten:
**AT BE DE FR GB IT LU NL SE**

(56) Entgegenhaltungen:
**BE-A-403 824**
**DE-B-2 254 005**
**FR-A-975 702**
**FR-A-1 214 985**
**FR-A-1 172 031**
**FR-A-2 254 467**
**FR-A-2 330 557**
**GB-A-382 283**
**US-A-1 775 528**
**US-A-4 064 976**
**US-A-4 030 574**

(73) Patentinhaber: **Schweizerische Bundesbahnen (Bauabteilung der Generaldirektion), Mittelstrasse 43, CH-3012 Bern (CH)**

(72) Erfinder: **Schüpbach, Hans-Rudolf, Spengelried, CH-3204 Rosshäusern Kanton Bern (CH)**
Erfinder: **Rathe, Eric J., Wettsteinstrasse 79, CH-8332 Russikon Kanton Zürich (CH)**

(74) Vertreter: **Bovard, Fritz Albert et al, Bovard & Cie. Patentanwälte VSP-Rechtsanwälte Optingenstrasse 16, CH-3000 Bern 25 (CH)**

Balkengleisbremse

Die Erfindung betrifft eine Balkengleisbremse aus jeweils zwei beidseitig jeder Fahrschiene eines Gleises liegenden, oder aus nur zwei beidseitig einer Fahrschiene liegenden, parallel zu derselben verlaufenden Balken mit nebeneinander gereihten Segmenten als Bremsbeläge, die zwischen sich eine für die abzubremsenden Räder eines sich bewegenden Eisenbahnwagens bestimmte Bremsrille bilden, wobei die jeder bzw. der Fahrschiene zugekehrten Längsseiten der Balken längliche Aussparungen aufweisen, die voneinander durch quer zu den Längsachsen der Balken verlaufende Stege getrennt sind und in denen die Segmente formschlüssig eingebaut sind.

Die Balkengleisbremsen dieser Art haben die Aufgaben, die in einem Rangierbahnhof ablaufenden Eisenbahnwagen auf eine bestimmte Geschwindigkeit abzubremsen oder sie ganz zum Stehen zu bringen. Bei der Bremsung werden die Wagenräder von je zwei Balken der Gleisbremse, die aus ihren Ausgangsstellungen angehoben werden, seitlich angepresst. Beim Bremsvorgang entstehen schrille, quitschende Geräusche von erheblicher Lautstärke. Diese Geräusche entstehen durch Schwingungen der Wagenräder infolge der Reibung zwischen den Bremsbelägen der Bremsbalken und den Wagenrädern. Solche Geräusche sind für die Umwelt belästigend.

Verschiedene Mittel wurden angewandt, um das beim Bremsen entstehende Geräusch mindestens zu vermindern. So wurden die Kontaktflächen zwischen den Bremsbelägen und den Wagenrädern mit flüssigen oder halbflüssigen Bremsmitteln aus Trägerflüssigkeit und körnigem Bremsmaterial bespritzt. Es wurde auch versucht, die Reibflächen mit wässrigen Pasten, Öl/Wasseremulsionen oder flüssigem Schaumstoff zu belegen, welche Mittel aber verhältnismässig geringe Resultate brachten und ausserdem kostspielig waren, weil sie in grossen Mengen zum Einsatz kamen.

Gemäss der deutschen Patentschrift Nr. 2254005 werden die Schwingungen der Wagenräder beim Bremsvorgang durch eine neben der Fahrschiene angeordnete und an die Wagenräder bei deren Durchlauf angreifende Schiene aus gummielastischem Material aufgefangen. Somit werden die beim Bremsen auftretenden Quietschgeräusche unterdrückt.

Obschon die Wagenräder die gummielastische Schiene nur schwach berühren, wird sie doch beim Befahren insbesondere durch Lokomotiven oder ganze Züge mit der Zeit zerstört. Ausserdem ist die Beschaffung und Installierung solcher zusätzlicher gummielastischer Schienen kostspielig.

Für abzubremsende Eisenbahnwagen, deren Ablaufgeschwindigkeit grösser als 2 bis 3 m/s ist, werden gemäss der AT-PS Nr. 337246 Bremsbalken vorgeschlagen, die mit seitlich verstifteten und angeschraubten Bremssegmenten ausgestattet sind. Die Segmente sind mit gegenseitigem Abstand nebeneinander an inneren Längsseiten der Bremsbalken mittels horizontaler Schraubbolzen und Spannstiften befestigt, die auch die Anpress- und Bremskräfte aufnehmen. Mit solchen Segmenten kann die Lärmentwicklung weitgehend unterdrückt werden, weil infolge der Reibung zwischen den Bremsbalken und der Radbandage des abzubremsenden Wagens beim Bremsvorgang lediglich die an den Anpressflächen des Bremsbalkens befestigten Segmente zu Eigenschwingungen angeregt werden.

Der Nachteil solcher mit seitlich angebrachten Segmenten versehenen Bremsbalken besteht darin, dass bei Ablaufgeschwindigkeiten, die unter 2 bis 3 m/s liegen, das Quietschgeräusch wieder ähnlich intensiv wie bei unsegmentierten Bremsbalken auftritt. Die Montage und Demontage der Segmente von der Seite ist durch Platzmangel erschwert.

Aus der US-Patentschrift Nr. 1778528 ist eine Balkengleisbremse mit zwei Bremsbalken bekannt, deren jede mit einer sich in Längsrichtung desselben erstreckenden Nut und einer die Nut einerseits begrenzenden Rippe versehen ist. Sowohl die Nut als auch die Rippe sind schräg nach oben in Richtung der Gleise geneigt. Jeder Bremsbelag ist mit einer sich in Richtung nach unten erstrekkenden Nase versehen, die in die Nut des Bremsbalkens hineingreift. Der Bremsbelag weist weiter einen abgerundeten Sockel zur Aufnahme der Rippe des Bremsbalkens auf. So kann der Bremsbelag auf der ebenfalls abgerundeten oberen Fläche der Rippe in gewissem Ausmass schwenken; zu diesem Zweck ist der Boden der Nut breiter als ihr Oberteil. Somit ist der Bremsbelag gegenüber dem Rad selbsteinstellend.

Die Konstruktion einer solchen Balkengleisbremse ist durch die Nut und die Rippen kompliziert, wobei auch der Bremsbelag dementsprechend gestaltet werden muss. Es ist anzunehmen, dass durch die Konstruktion der Bremsbalken, in welchen die Bremsbeläge nicht starr eingebaut sind, die Intensität der beim Bremsen entstehenden Geräusche keineswegs herabgesetzt wird, weil die auftretenden Kräfte nicht direkt von dem Bremsbalken aufgenommen und auf das Tragaggregat übertragen werden.

Es ist die Aufgabe der Erfindung, mit den Nachteilen der bekannten Balkengleisbremsen auszuräumen und eine Balkengleisbremse zu schaffen, mit welcher die gewünschte Lärmreduktion beim Bremsen von ablaufenden Eisenbahnwagen auch im niedrigen Geschwindigkeitsbereich erzielt wird. Dabei soll die Konstruktion einer solchen Balkengleisbremse einfach sein.

Diese Aufgaben werden erfindungsgemäss bei der eingangs genannten Balkengleisbremse durch die Merkmale der Kennzeichnung des Patentanspruches 1 gelöst.

Mit Vorteil sind die Segmente in den Aussparungen durch senkrecht verlaufende Schraubenbolzen festgehalten, wobei sich die Seitenflächen der Segmente gegen die Stege abstützen und die eigentliche Bremsflächen bildenden Längsflächen der Segmente frei liegen und die inneren Längsränder der Balken überragen.

Der Erfindungsgegenstand wird nachstehend anhand der Zeichnung beispielsweise näher erläutert. Es zeigen:

Fig. 1 eine schematische Ansicht eines äusseren Balkenstückes mit Segmenten einer Balkengleisbremse, und

Fig. 2 einen Querschnitt durch das eine Balkenpaar der Gleisbremse nach der Fig. 1 mit einem in strichpunktierter Linie angedeuteten Wagenrad.

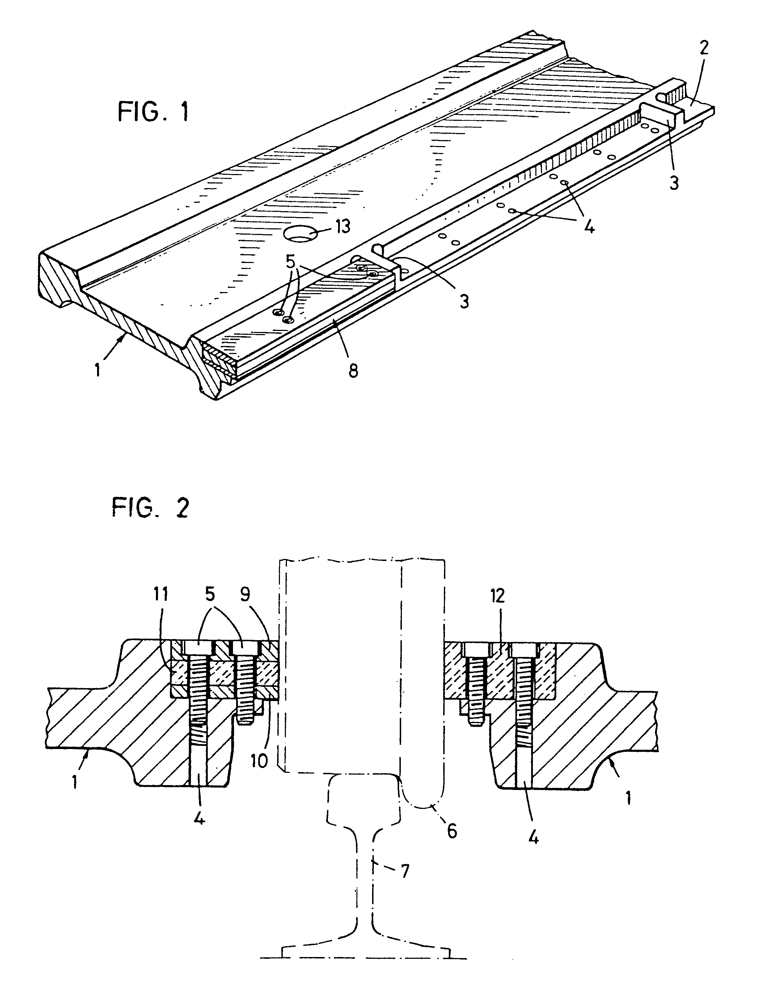

Aus der Fig. 2 ist ersichtlich, dass beidseitig einer Fahrschiene 7 je ein zu der Fahrschiene 7 parallel verlaufender Balken 1 einer Gleisbremse angeordnet ist. Je ein Balken eines zweiten, nicht dargestellten Balkenpaares der Gleisbremse ist in gleicher Weise beidseitig der zweiten Fahrschiene angeordnet. Bei einer einseitigen Balkengleisbremse wird nur ein Balkenpaar an einer Fahrschiene verwendet. Die Bremsbeläge der Balken 1 bestehen, wie aus den Fig. 1 und 2 ersichtlich ist, aus Segmenten 8 oder 12, die zwischen sich eine für abzubremsende, auf der Fahrschiene 7 laufende Räder 6 (siehe die Fig. 2) eines Eisenbahnwagens bestimmte Bremsrille bilden.

Wie aus der Fig. 1 weiter zu entnehmen ist, ist die innere Längsseite jedes Balkens 1 mit nach oben offenen Aussparungen 2 versehen, die durch quer zur Längsachse des Balkens 1 verlaufende Stege 3 voneinander getrennt sind. Die Länge dieser Aussparungen 2 beträgt mit Vorteil etwa 650 bis 700 mm. In diesen Aussparungen 2 sind die Segmente 8, 12 so eingesetzt, dass sie sich mit ihren Endflächen gegen die Stege 3 abstützen. Die Segmente 8, 12 sind in den Aussparungen 2 durch senkrecht verlaufende Schraubenbolzen 5 festgehalten. Mit 4 sind die Löcher für Schraubenbolzen 5 in den Aussparungen 2 und mit 13 die Löcher für nicht dargestellte Schraubenbolzen bezeichnet, mittels welcher der Balken 1 an nicht dargestelltem Tragaggregat befestigt ist.

Mit Vorteil sind die Segmente 8 mindestens auf den äusseren Balken 1 der Balkenpaare als Sandwichsegmente ausgeführt, d.h. dass sie aus horizontal verlaufenden, aufeinander liegenden Schichten 9, 11, 10 bestehen. Die schmalen Längsseiten dieser Schichten bilden die eigentlichen Bremsflächen; beim Anpressen des Balkens gegen die Räder stützen sie sich gegen die Radbandagen ab, wie aus der Fig. 2 ersichtlich ist. Die einzelnen Schichten der Segmente 8 können z.B. aus einem aus Stahl bestehenden Oberteil 9, einem ebenfalls aus Stahl bestehenden Unterteil 10 und einer Einlage 11 bestehen, die zwischen dem Oberteil 9 und dem Unterteil 10 liegt. Diese Einlage kann z.B. aus Kunststoff, Eisen, Eisenlegierungen, Nicht-Eisenmetallen, Sintermetallen, Keramik oder einem organischen Werkstoff, z.B. Holz, sein. Es ist aber auch möglich, die Materialien beliebig zu kombinieren und sie in beliebigen Schichten 9, 11, 10 zu verwenden. Die Segmente auf dem inneren Balken 1 jedes Balkenpaares sind vorzugsweise als einstückige Vollsegmente 12 ausgebildet. Das Material dieser Vollsegmente kann das gleiche wie bei den Segmenten auf den äusseren Balken sein. Die Materialien können auch hier beliebig kombiniert werden. Die Bremse kann derart ausgeführt werden, dass vorwiegend die Segmente der inneren Balken die Aufgabe der Bremsung übernehmen und die Segmente der äusseren Balken nur den Gegendruck ohne massgebende Bremswirkung erzeugen. Dabei werden die Segmente der äusseren Balken mit Hilfe eines Schmiermittels gleitfähig gehalten. Es ist aber auch möglich, dass sowohl auf den äusseren als auch auf den inneren Balken die Segmente in Sandwichform oder als einstückige Vollsegmente ausgeführt werden.

Die Segmente 8, 12 sind formschlüssig in die Längsseiten der Balken 1 eingebaut, so dass die beim Bremsen auftretenden Kräfte direkt von den Balken aufgenommen und auf das Tragaggregat übertragen werden. Somit können auch nicht metallische Segmentwerkstoffe sowie Sandwichsegmente verwendet werden. Die Schraubenbolzen 5 haben primär eine Haltefunktion, nehmen aber keine Anpresskräfte und nur geringe Bremskräfte auf.

Die Segmente können an beiden Längsseiten je um etwa 10 mm abgenutzt werden, wobei der jeweilige Abnutzungsstand durch eine visuelle Kontrolle sofort feststellbar ist. Eine Nachmessung mit einem Messinstrument erübrigt sich. Dank der Befestigung der Schraubenbolzen 5 von oben ist eine rationelle Kontrolle derselben und die Auswechslung der Segmente 8, 12 gewährleistet. Dies wirkt sich im Sinne vereinfachten Unterhaltes aus.

Die oben beschriebene Anordnung der Segmente an den Bremsbalken bringt eine sehr deutliche Minderung sowohl der Häufigkeit als auch der durchschnittlichen Intensität der Quietschgeräusche beim Bremsen der ablaufenden Eisenbahnwagen. Die Reduktion beträgt 10 bis 15 dB(A). Die Quietschgeräusche treten bis zu 30 Mal weniger häufig auf als bei den Bremsbalken nach der AT-PS Nr. 337246.

**Patentansprüche**

1. Balkengleisbremse aus jeweils zwei beidseitig jeder Fahrschiene (7) eines Gleises liegenden, oder aus nur zwei beidseitig einer Fahrschiene (7) liegenden, parallel zu derselben verlaufenden Balken (1), mit nebeneinandergereihten Segmenten (8, 12) als Bremsbeläge, die zwischen sich eine für die abzubremsenden Räder (6) eines sich bewegenden Eisenbahnwagens bestimmte Bremsrille bilden, wobei die jeder bzw. der Fahrschiene (7) zugekehrten Längsseiten der Balken (1) längliche Aussparungen (2) aufweisen, die voneinander durch quer zu den Längsachsen der Balken (1) verlaufende Stege (3) getrennt sind und in denen die Segmente (8, 12) formschlüssig eingebaut sind, dadurch gekennzeichnet, dass die Bodenfläche jeder Aussparung (2), die in horizontaler Ebene liegt, breiter ist als die Aussparungshöhe und dass in den Aussparungen (2) die Segmente (8, 12) starr eingebaut sind.

2. Balkengleisbremse nach Anspruch 1, dadurch gekennzeichnet, dass die Segmente (8, 12) in den Aussparungen (2) durch senkrecht verlaufende Schraubenbolzen (5) festgehalten sind, wobei sich die Seitenflächen der Segmente (8, 12) gegen die Stege (3) abstützen und die die eigentliche Bremsflächen bildenden Längsflächen der Segmente (8, 12) frei liegen und die inneren Längsränder der Balken (1) überragen.

3. Balkengleisbremse nach Anspruch 1, dadurch gekennzeichnet, dass die Länge der Aussparungen (2) 650 bis 700 mm beträgt.

4. Balkengleisbremse nach Anspruch 1, dadurch gekennzeichnet, dass die Segmente (8) als Sandwichsegmente ausgebildet sind, die mindestens zwei horizontale, aufeinanderliegende Schichten (9, 11, 10) aus voneinander unterschiedlichem Material aufweisen.

## Claims

1. Railway wagon retarder composed of two beams (1) respectively situated on both sides of each rail (7) of a track, or of only two beams situated on both sides of one rail (7), and running parallel thereto, having segments (8, 12) ranged side by side as brake linings which form between them a braking groove intended for the wheels (6) of a moving railway wagon to be braked, the longitudinal sides of the beams (1) facing each rail (7) or the rail (7) exhibiting elongated recesses (2) separated from one another by webs (3) which run transversely to the longitudinal axes of the beams (1) and in which the segments (8, 12) are form-lockingly mounted, characterized in that the bottom surface of each recess (2), which lies in a horizontal plane, is wider than the height of the recess, and that the segments (8, 12) are rigidly mounted in the recesses (2).

2. Railway wagon retarder according to claim 1, characterized in that the segments (8, 12) are secured in the recesses (2) by vertically running bolts (5), the lateral faces of the segments (8, 12) being braced against the webs (3), and the longitudinal faces of the segments (8, 12) forming the actual braking surfaces being exposed and extending beyond the inner longitudinal edges of the beams (1).

3. Railway wagon retarder according to claim 1, characterized in that the length of the recesses (2) amounts to 650 to 700 mm.

4. Railway wagon retarder according to claim 1, characterized in that the segments (8) are formed as sandwich segments exhibiting at least two horizontal, superposed layers (9, 11, 10) of material differing from one another.

## Revendications

1. Frein de voie à poutre, constitué d'au moins une paire de poutres (1) disposées de part et d'autre de l'un des rails (7) ou de chacun des rails (7) d'une voie de chemin de fer, parallèlement au rail, et équipées de segments (8, 12) alignés les uns à côté des autres, constituant des garnitures de freinage et délimitant entre eux une gorge de freinage pour les roues (6) d'un wagon de chemin de fer se déplaçant sur la voie, frein dans lequel les côtés longitudinaux des poutres tournés vers le rail (7) qu'elles enserrent présentent des échancrures allongées (2), séparées par des montants (3) dirigés transversalement à l'axe longitudinal de la poutre (1) et les segments (8, 12) étant engagés et retenus en place dans lesdites échancrures, caractérisé en ce que les surfaces de fond des échancrures (2) sont disposées selon un plan horizontal et sont plus larges que la profondeur de l'échancrure, et en ce que les segments (8, 12) sont montés rigidement dans les échancrures.

2. Frein selon la revendication 1, caractérisé en ce que les segments (8, 12) sont fixés dans les échancrures (2) par des boulons filetés (5) disposés verticalement, en ce que les surfaces frontales des segments s'appuient contre les montants et en ce que les surfaces longitudinales des segments (8, 12), qui forment les surfaces de freinage actives, sont dégagées et dépassent les bords longitudinaux internes des poutres (1).

3. Frein de voie selon la revendication 1, caractérisé en ce que les échancrures (2) ont une longueur de 650 à 700 mm.

4. Frein de voie selon la revendication 1, caractérisé en ce que les segments (8) présentent une structure composite formée d'au moins deux couches de matériaux différents (9, 11, 10) superposées horizontalement.

FIG. 1

FIG. 2